# EUROPÄISCHE PATENTSCHRIFT

(11) **EP 2 464 763 B1**
(45) Veröffentlichungstag und Bekanntmachung des Hinweises auf die Patenterteilung: **03.05.2017**
(21) Anmeldenummer: 10754265.6
(22) Anmeldetag: 06.08.2010
(51) Int. Cl.: D01D 1/02, D01F 6/60, B29C 47/10

(54) **VERFAHREN ZUM BEHANDELN EINES MONOMERS, PRE-POLYMERS, POLYMERS ODER EINER ENTSPRECHENDEN MISCHUNG**
METHOD FOR TREATING A MONOMER, PRE-POLYMER, POLYMER OR A CORRESPONDING MIXTURE
PROCÉDÉ DE TRAITEMENT D'UN MONOMÈRE, PRÉ-POLYMÈRE, POLYMÈRE OU D'UN MÉLANGE CORRESPONDANT

(30) Priorität: 11.08.2009 DE 102009036915
(43) Veröffentlichungstag der Anmeldung: 20.06.2012
(73) Patentinhaber: LIST Technology AG, 4422 Arisdorf (CH)
(72) Erfinder: LIECHTI, Pierre, CH-4132 Muttenz (CH); GEISLER, Reinhard, 79650 Schopfheim (DE); STEINER, Manuel, CH-4054 Basel (CH)
(74) Vertreter: Patentanwälte und Rechtsanwalt Weiß, Arat & Partner mbB
(86) Internationale Anmeldenummer: PCT/EP2010/004822
(87) Internationale Veröffentlichungsnummer: WO 2011/018189

(56) Entgegenhaltungen:
- EP-A2- 0 348 825
- WO-A1-02/068106
- WO-A1-2008/095632
- WO-A1-2008/138597
- GB-A- 1 154 936
- GB-A- 2 076 728
- JP-A- 52 047 840
- US-A- 3 559 240
- US-A- 3 850 888

## Beschreibung

Die Erfindung betrifft ein Verfahren sowie eine Anlage zum Behandeln eines Monomers, Pre-Polymers, Polymers oder einer entsprechenden Mischung gemäss den Merkmalen von Anspruch 1 oder 9.

### STAND DER TECHNIK

Für viele Fälle im privaten und industriellen Bereich werden heute Kunststofffasern benötigt. Beispielsweise gilt dies für alle Arten von Kleidungsstücken, Verstärkungsgewebe, technische Textilien, Verschleissbeläge, Filter usw.. Zu diesem Zweck wird das entsprechende Polymer, welches meist stückig oder in Pulverform vorliegt, mit einem Lösungsmittel vermischt, aufgeschmolzen, homogenisiert, entgast und dann im noch viskosen Zustand Düsen zugeführt, aus denen es dann zur Bildung der Fasern mit hohem Druck ausgepresst wird.

Aus der WO2008/138597 ist bspw. ein Verfahren bekannt, bei dem als Lösungsmittel flüssige Schwefelsäure verwendet wird und zumindest das Mischen, Homogenisieren und Entgasen in einem vorzugsweise kontinuierlich betriebenen Ein- oder Zweiwellen- Mischkneter erfolgt. Damit entfällt das bisher erforderliche Kühlen der Schwefelsäure unter den Koagulationspunkt, was das ganze Verfahren wesentlich vereinfacht und verbilligt.

Weiterhin wird in der JP 52-047840 A der Zweck offenbart, einen optischen, anisotrophen Stoff aus einem Polymer mit einer hohen Konzentration herzustellen, welcher für Spinnlösungen durch Hinzufügen eines Polymers zu einem optischen anisotrophen Stoffe des Polymers mit einer relativ niedrigen Konzentration verwendbar ist.

Die EP 0 348 825 A2 beschreibt ein Verfahren zur Herstellung von PPTA aus Monomeren und deren Zwischenkomponenten.

Aus der WO 2008/095632 A1 geht ein Verfahren zum Auflösen eines Aramidpolymers in Schwefelsäure mit Hilfe eines Zweiwellen-Kneter hervor, umfassend die Schritte: a) Dosieren das Polymers und des Lösungsmittels in den Kneter; b) Mischen des Polymers und des Lösungsmittels, um das Polymer in dem Lösungsmittel zur Gewinnung einer Lösung aufzulösen; c) Entgasen der Lösung, um eine Spinnlösung zu erhalten; und d) Transportieren des Spinnlösung aus dem Kneter.

Die US 3,559,240 wiederum beschreibt ein Verfahren sowie eine Vorrichtung zum Extrudieren von komprimierbaren Materialien.

### Aufgabe

Aufgabe der vorliegenden Erfindung ist es, das aus der WO 2008/138597 bekannte Verfahren noch weiter zu verbessern und die Produktqualität zu erhöhen.

### Lösung der Aufgabe

Zur Lösung der Aufgabe führen die Merkmale von Anspruch 1 und 9.

Das Zwangseintragen des Produktes hat den Vorteil, dass das Produkt vor dem Eintritt in den Mischkneter kompaktiert bzw. verdichtet wird, sodass es fast totraumfrei in den Mischkneter eingetragen werden kann. Dadurch werden auch Lufteinschlüsse vermieden, sodass die Behandlung des Produktes in dem Mischkneter wesentlich effizienter erfolgt. Des Weiteren hat die Zwangsförderung den Vorteil, dass der Transport des Produktes nicht mehr von der Schwerkraft abhängig ist, sondern das Produkt aktiv weiter bewegt wird.

Der Eintrag in den Mischkneter erfolgt bevorzugt nahe an einer Stirnfläche des Mischkneters, sodass kein Mischlängenverlust im Mischkneter auftritt, da bereits die erste Mischkneterzone nach der Stirnfläche als Mischkammer verwendet werden kann. Aus diesem Grunde erfolgt auch ein Eintrag von insbesondere Lösungsmittel nahe der Stirnfläche des Mischkneters.

Als Zwangseintragseinrichtung sind mehrere Möglichkeiten denkbar, von denen nur einige beispielhaft nachfolgend erwähnt werden sollen. Wesentlich ist, dass durch die Zwangseintragseinrichtung genügend Kraft/Druck auf das Produkt aufgebracht wird, damit ein Zwangseintrag erfolgen kann. Dies kann mit einer mechanischen Einrichtung erfolgen, die, wiederum bevorzugt, zumindest eine, bevorzugt zwei Förderschnecken aufweist/en, die miteinander kämmen. Die Förderschnecke ist dabei wandbündig ausgestaltet, das heisst, ihr äusserer Durchmesser entspricht in etwa dem inneren Durchmesser eines Gehäuses, in dem sich die Förderschnecke dreht.

Zum Aufbau eines entsprechenden Druckes kann die Steigung der Schnecke unterschiedlich sein. Beispielsweise ist die Steigung der Schnecke nahe dem Eintrag des Produkts grösser ausgebildet, verringert sich aber im weiteren Verlauf, sodass der Produkttransport langsamer erfolgt, das Produkt dabei aber verdichtet wird.

Das Produkt selbst, insbesondere das Monomer, Pre-Polymer, Polymer Additive oder eine entsprechende Mischung davon, kann in einem unterschiedlichen Aggregatzustand vorliegen. Beispielsweise ist an Pulverform gedacht.

Das Lösungsmittel selbst kann an einer beliebigen Stelle und/oder in beliebiger Orientierung in den Mischkneter und/oder in die Zwangseintragseinrichtung eingegeben werden, wobei bei letzterer Möglichkeit das Produkt in der Zwangseintragseinrichtung bereits vorgemischt wird. Der Eintrag des Lösungsmittels in den Mischkneter erfolgt bevorzugt nahe der Eintragszone zwischen Zwangseintragseinrichtung und Mischkneter und dort wiederum nahe der Stirnfläche des Mischkneters.

In der Eintragszone selbst kann auch eine thermische Beeinflussung des Produktes erfolgen, was eine grössere Tiefenwirkung beinhaltet. Zum Beispiel wird Wärme hierdurch besser und intensiver in das Produkt eingetragen.

Falls gewünscht, können dem Mischkneter auch mehrere Zwangseintragseinrichtungen zugeordnet sein, sodass auch unterschiedliche Produkte in den Mischkneter eingegeben werden können, die beispielsweise dann im Mischkneter miteinander reagieren. Hier sind viele Möglichkeiten denkbar, die vom Erfindungsgedanken umfasst sein sollen.

Mischkneter dienen sehr vielfältigen Zwecken. Als erstes ist das Eindampfen mit Lösungsmittelrückgewinnung zu erwähnen, welches chargenweise oder kontinuierlich und oft auch unter Vakuum erfolgt. Hierdurch können beispielsweise Destillationsrückstände behandelt werden, aber auch Produktionsrückstände mit toxischen oder hochsiedenden Lösungsmitteln aus der Chemie und Pharmaproduktion, Waschlösungen und Lack-Schlämme, Polymerlösungen, Elastomerlösungen aus der Lösemittelpolymerisation, Klebstoffe und Dichtmassen.

Mit den Apparaten wird ferner eine kontinuierliche oder chargenweise Kontakttrocknung, Wasser- und/oder lösemittelfeuchter Produkte, oftmals ebenfalls unter Vakuum, durchgeführt. Die Anwendung ist vor allem gedacht für Pigmente, Farbstoffe, Feinchemikalien, Additive, wie Salze, Oxyde, Hydroxyde, Antioxydantien, temperaturempfindliche Pharma- und Vitaminprodukte, Wirkstoffe, Polymere, synthetische Kautschuke, Polymersuspensionen, Latex, Hydrogele, Wachse, Pestizide und Rückstände aus der chemischen oder pharmazeutischen Produktion, wie Salze, Katalysatoren, Schlacken, Ablaugen gedacht. Anwendung finden diese Verfahren auch in der Lebensmittelproduktion, beispielsweise bei der Herstellung und/oder Behandlung von Blockmilch, Zuckeraustauschstoffen, Stärkederivaten, Alginaten, zur Behandlung von Industrieschlämmen, Ölschlämmen, Bioschlämmen, Papierschlämmen, Lackschlämmen und allgemein zur Behandlung von klebrigen, krustenden zähpastösen Produkten, Abfallprodukten und Zellulosederivaten.

In Mischknetern kann ein Entgasen und/oder Devolatilisieren stattfinden. Angewendet wird dies auf Polymerschmelzen, auf Spinnlösungen für synthetische Fasern und auf Polymer- oder Elastomergranulate bzw. -pulver im festen Zustand.

In einem Mischkneter kann eine Polykondensationsreaktion, meist kontinuierlich und meist in der Schmelze, stattfinden und wird vor allem verwendet bei der Behandlung von Polyamiden, Polyester, Polyacetaten, Polyimide, Thermoplaste, Elastomere, Silikone, Harnstoffharze, Phenolharze.,

Stattfinden kann auch eine Polymerisationsreaktion, ebenfalls meist kontinuierlich. Dies wird angewendet auf Polyakrylate, Hydrogele, Polyole, thermoplastische Polymere, Elastomere, syndiotaktisches Polystyrol und Polyacrylamide.

Ganz allgemein können im Mischkneter Reaktionen fest-/ flüssig und mehrphasige Reaktionen stattfinden. Dies gilt vor allem für Backreaktionen, bei der Behandlung von Flusssäure, Stearaten, Zyanaten, Polyphosphaten, Cyanursäuren, Zellulosederivaten, -ester, -äther, Polyacetalharzen, Sulfanilsäuren, Cu-Phthalocyaninen, Stärkederivaten, Ammoniumpolyphosphaten, Sulfonaten, Pestiziden und Düngemittel.

Des weiteren können Reaktionen fest-/gasförmig (z.B. Karboxylierung) oder flüssig-/gasförmig stattfinden. Angewendet wird dies bei der Behandlung von Acetaten, Aciden, Kolbe-Schmitt-Reaktionen, z.B. BON, Na-Salicylaten, Parahydroxibenzoaten und Pharmaprodukten.

Reaktionen flüssig-/flüssig erfolgen z.B. bei Neutralisationsreaktionen und Umesterungsreaktionen.

Ein Lösen und/oder Entgasen in derartigen Mischknetern findet bei Spinnlösungen für synthetische Fasern, Polyamiden, Polyester und Zellulosen statt.

Eine Solid-State- Nachkondensation findet bei der Herstellung bzw. Behandlung von Polyester und Polyamiden statt, ein kontinuierliches Anmaischen z.B. bei der Behandlung von Fasern, z.B. Zellulosefasern mit Lösungsmitteln, eine Kristallisation aus der Schmelze oder aus Lösungen bei der Behandlung von Salzen, Feinchemikalien, Polyolen, Alkoholaten, ein Compoundieren, Mischen (kontinuierlich und/oder chargenweise) bei Polymeren-Mischungen, Silikonmassen, Dichtmassen, Flugasche, ein Coagulieren (insbesondere kontinuierlich) bei der Behandlung von Polymersuspensionen.

In einem Mischkneter können auch multifunktionale Prozesse kombiniert werden, beispielsweise Erhitzen, Trocknen, Schmelzen, Kristallisieren, Mischen, Entgasen, Reagieren - dies alles kontinuierlich oder chargenweise. Hergestellt bzw. behandelt werden dadurch Polymere, Elastomere, anorganische Produkte, Rückstände, Pharmaprodukte, Lebensmittelprodukte, Druckfarben. In Mischknetern kann auch eine Vakuumsublimation/ Desublimation stattfinden, wodurch chemische Vorprodukte, z.B. Anthrachinon, Metallchloride, metallorganische Verbindungen usw. gereinigt werden. Ferner können pharmazeutische Zwischenprodukte hergestellt werden.

Eine kontinuierliche Trägergas-Desublimation findet z.B. bei organischen Zwischenprodukten, z.B. Anthrachinon und Feinchemikalien statt.

Mischkneter können ein- oder zweiwellig sein, gleichsinnig oder gegensinnig mit gleicher oder verschiedener Drehzahl drehen.

Ein Mischkneter der oben genannten Art ist beispielsweise aus der EP 0 517 068 B1 bekannt. Bei ihm drehen in einem Mischergehäuse zwei achsparallel verlaufende Wellen entweder gegensinnig oder gleichsinnig. Dabei wirken auf Scheibenelementen aufgesetzte Mischbarren miteinander. Neben der Funktion des Mischens haben die Mischbarren die Aufgabe, produktberührte Flächen des Mischergehäuses, der Wellen und der Scheibenelemente möglichst gut zu reinigen und damit ungemischte Zonen zu vermeiden. Insbesondere bei stark kompaktierenden, aushärtenden und krustenden Produkten führt die Randgängigkeit der Mischbarren zu hohen örtlichen mechanischen Belastungen der Mischbarren und der Wellen. Diese Kraftspitzen treten insbesondere beim Eingriff der Mischbarren in denjenigen Zonen auf, wo das Produkt schlecht ausweichen kann. Solche Zonen sind z.B. dort gegeben, wo die Scheibenelemente auf der Welle aufgesetzt sind. Weitere Mischkneter sind in der DE 590 00 547.2, DE 591 06 245.3, DE 592 03 529.8, DE 195 36 944.0, DE 596 00 991.7, DE 199 40 521.2, DE 101 20 391.8, DE 101 50 900.6 usw. beschrieben.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine schematisch bzw. blockschaltbildlich dargestellte Anlage zur Durchführung des erfindungsgemässen Verfahrens zum Behandeln eines Monomers, Pre-Polymers, Polymers oder einer entsprechenden Mischung;
**Figur 2** eine schematische und blockschaltbildliche Darstellung von Teilen der Anlage nach Figur 1.

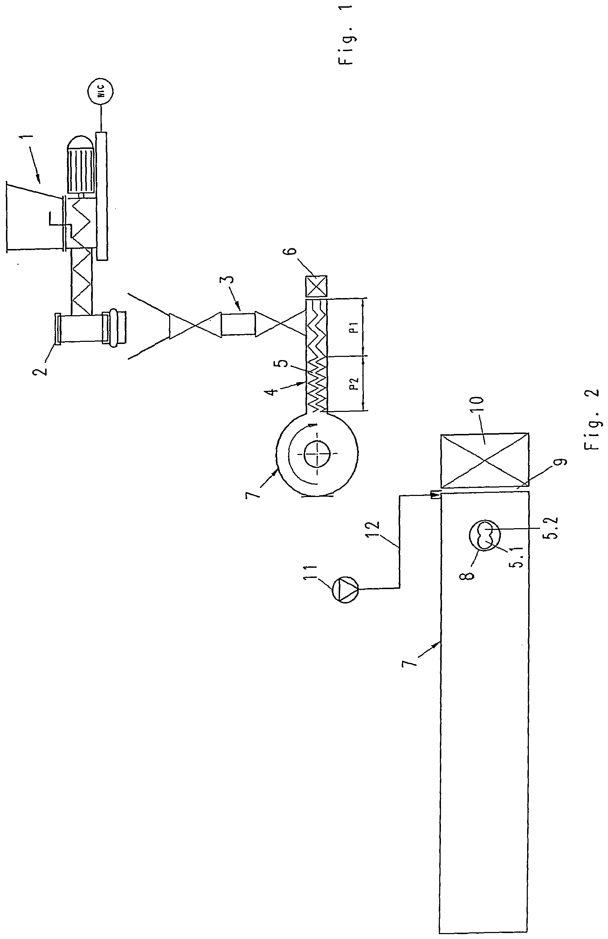

In der Anlage gemäss Figur 1 ist eine Dosiereinrichtung 1 vorgesehen, in der eine gravimetrische Dosierung des zu behandelnden Produktes erfolgt. Dieses Produkt wird über eine Austragseinrichtung 2 in eine Pulverschleuse 3 ausgetragen. Aus der Pulverschleuse 3 gelangt das Produkt in eine Fördereinrichtung 4, in der sich zumindest eine Förderschnecke 5 befindet. Ein entsprechender Antrieb 6 für diese Förderschnecke ist ebenfalls angedeutet.

Im gezeigten Ausführungsbeispiel weist die Förderschnecke 5 zonenweise zwei unterschiedliche Steigungen P₁ bzw. P₂ auf, wobei die Steigung P₁ grösser ist als die Steigung P₂. Das bedeutet, dass das Produkt in der Zone mit der Steigung P₁ weniger komprimiert, aber schneller gefördert wird, während sich die Komprimierung in der Zone P₂ erhöht.

Aus der Fördereinrichtung 4 gelangt das Produkt in einen Mischkneter 7, der beliebig ausgestaltet sein kann. Eine entsprechende Eintragszone 8 befindet sich gemäss Figur 2 sehr nahe an einer Stirnfläche 9 des Mischkneters 7, wobei in der Eintragszone 8 auch eine Fördereinrichtung mit zwei Förderschnecken 5.1 und 5.2 angedeutet ist.

Entsprechende aus dem Stand der Technik bekannte Misch- und Knetelemente an insbesondere Misch- und Knetwellen werden durch einen nahe der Stirnfläche 9 vorgesehenen Motor 10 angetrieben.

Des Weiteren erfolgt nahe der Stirnfläche 9 bzw. oberhalb des Einlasses 8 die Zugabe eines Lösungsmittels bzw. einer gewünschten Flüssigkeit, wozu eine Dosierpumpe 11 vorgesehen ist. Die entsprechende Zuleitung von Dosierpumpe 11 in den Mischkneter 7 ist mit 12 gekennzeichnet.

Die Funktionsweise der vorliegenden Erfindung ist folgende:
Ein zu behandelndes Produkt, insbesondere ein Monomer, Pre-Polymer, Polymer Additiv oder eine entsprechende Mischung wird in der Dosiereinrichtung 1 dosiert und über die Austragseinrichtung 2 und die Pulverschleuse 3 in die Fördereinrichtung 4 (Zwangseintragseinrichtung) eingegeben. In Folge der Ausgestaltung der Förderschnecke/n erfolgt eine Kompaktierung des Produktes, wobei ein Druck auf das Produkt aufgebaut wird. Dies hat zur Folge, dass das Produkt nahezu totraumfrei in den Mischkneter 7 zwangseingetragen wird. Dies geschieht wiederum nahe der Stirnfläche 9 des Mischkneters 7, sodass beinahe 100% der Mischlänge des Mischkneters 7 ausgenutzt werden kann. Hinzu kommt, dass auch die Flüssigkeit, insbesondere das Lösungsmittel, durch die Dosierpumpe 11 sehr nahe der Stirnfläche 9 in den Mischkneter 7 eingetragen wird.

**Bezugszeichenliste**

| | | | | | |
|---|---|---|---|---|---|
| 1 | Dosiereinrichtung | 34 | | 67 | |
| 2 | Austragseinrichtung | 35 | | 68 | |
| 3 | Pulverschleuse | 36 | | 69 | |
| 4 | Fördereinrichtung | 37 | | 70 | |
| 5 | Förderschnecke | 38 | | 71 | |
| 6 | Motor | 39 | | 72 | |
| 7 | Mischkneter | 40 | | 73 | |
| 8 | Eintragszone | 41 | | 74 | |
| 9 | Stirnfläche | 42 | | 75 | |
| 10 | Motor | 43 | | 76 | |
| 11 | Dosierpumpe | 44 | | 77 | |
| 12 | Zuleitung | 45 | | 78 | |
| 13 | | 46 | | 79 | |
| 14 | | 47 | | | |
| 15 | | 48 | | | |
| 16 | | 49 | | P₁ | Steigung von 5 |
| 17 | | 50 | | P₂ | Steigung von 5 |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Herstellung einer Spinnlösung für die Herstellung einer Polymerfaser, insbesondere einer p-Aramid-Faser, wobei ein Monomer, Pre-Polymer, Polymer, Additive oder eine entsprechende Mischung in einem Mischkneter mit einem Lösungsmittel versetzt, vermischt, aufgeschmolzen, homogenisiert und/oder entgast und sodann ausgetragen wird,
**dadurch gekennzeichnet,**
**dass** das Monomer, Pre-Polymer, Polymer oder eine entsprechende Mischung mittels einer Zwangseintragseinrichtung (4) in den Mischkneter (7) zwangseingetragen wird, wobei die Zwangseintragseinrichtung eine dem Mischkneter (7) vorgeschaltete Fördereinrichtung (4) mit zumindest einer Förderschnecke (5, 5.1, 5.2) mit unterschiedlichen Steigungen (P₁, P₂) ist, in welche das Monomer, Pre-Polymer, Polymer oder eine entsprechende Mischung eingegeben wird und in der Kraft/Druck zum Mischkneter (7) hin aufgebaut, das Produkt kompaktiert bzw. verdichtet und dann nahezu totraumfrei in den Mischkneter (7) eingetragen wird.

2. Verfahren nach Anspruch 1, **dadurch gekennzeichnet, dass** das Monomer, Pre-Polymer, Polymer oder eine entsprechenden Mischung nahe einer Stirnfläche (9) des Mischkneters (7) in diesen eingetragen wird.

3. Verfahren nach Anspruch 1 oder 2, **dadurch gekennzeichnet, dass** das Monomer, Pre-Polymer, Polymer oder einer entsprechende Mischung als Pulver eingetragen wird.

4. Verfahren nach einem der Ansprüche 1 bis 3, **dadurch gekennzeichnet, dass** das Lösungsmittel unabhängig von dessen Aggregatzustand an beliebiger Stelle und/oder in beliebiger Orientierung in den Mischkneter (7) eingetragen wird.

5. Verfahren nach einem der Ansprüche 1 bis 4, **dadurch gekennzeichnet, dass** das Monomer, Pre-Polymer, Polymer oder eine entsprechende Mischung mit dem Lösungsmittel unabhängig von dessen Aggregatzustand vorgemischt in den Mischkneter (7) eingetragen wird.

6. Verfahren nach Anspruch 5, **dadurch gekennzeichnet, dass** das Monomer, Pre-Polymer, Polymer oder eine entsprechende Mischung in der Zwangseintragseinrichtung (4) vorgemischt wird.

7. Verfahren nach einem der Ansprüche 1 bis 6, **dadurch gekennzeichnet, dass** der Mischkneter (7) und/oder die Zwangseintragseinrichtung (4) im Bereich einer Eintragszone (8) thermisch beeinflusst werden.

8. Verfahren nach einem der Ansprüche 1 bis 7, **dadurch gekennzeichnet, dass** das Lösungsmittel an verschiedenen Stellen in der Zwangseintragseinrichtung (4) und/oder den Mischkneter (7) und/oder in unterschiedlichen Mengen eingetragen wird.

9. Anlage zur Durchführung des Verfahrens nach einem der Ansprüche 1 bis 8, **dadurch gekennzeichnet, dass** dem Mischkneter (7) eine Einrichtung (4) zum Zwangseintragen des Monomers, Pre-Polymers, Polymers oder einer entsprechenden Mischung zugeordnet ist, wobei die Zwangseintragseinrichtung eine dem Mischkneter (7) vorgeschaltete Fördereinrichtung (4) mit zumindest einer Förderschnecke (5, 5.1, 5.2) mit unterschiedlichen Steigungen (P₁, P₂) ist, in welche das Monomer, Pre-Polymer, Polymer oder eine entsprechende Mischung einzugeben ist und in der Kraft/Druck zum Mischkneter (7) hin aufbaubar, das Produkt kompaktiert bzw. verdichtbar und dann nahezu totraumfrei in den Mischkneter (7) eintragbar ist.

10. Anlage nach Anspruch 9, **dadurch gekennzeichnet, dass** die Einrichtung eine ein- oder zweiwellige Förderschnecke (5, 5.1, 5.2) ist.

11. Anlage nach Anspruch 10, **dadurch gekennzeichnet, dass** die Geometrie, insbesondere die Steigung (P₁, P₂) der Förderschnecke (5, 5.1, 5.2) als auch deren Kerndurchmesser so ausgelegt ist, dass gewünschte Druck- und/oder Entlastungszonen entstehen.

12. Anlage nach einem der Ansprüche 9 bis 11, **dadurch gekennzeichnet, dass** der Mischkneter (7) einen Einlass für das Lösungsmittel aufweist.

13. Anlage nach einem der Ansprüche 9 bis 12, **dadurch gekennzeichnet, dass** die Einrichtung (4) zum Zwangseintragen des Monomers, Pre-Polymers oder einer entsprechenden Mischung in den Mischkneter (7) einen Einlass für das Lösungsmittel aufweist.

14. Anlage nach einem der Ansprüche 9 bis 13, **dadurch gekennzeichnet, dass** dem Mischkneter (7) mehr als eine Einrichtung (4) zum Zwangseintrag des Monomers, Pre-Polymers oder einer entsprechenden Mischung zugeordnet ist.

## Claims

1. Method for preparing a spinning solution for producing a polymer fibre, in particular a p-aramid fibre, wherein a solvent is added to a monomer, prepolymer, polymer additives or a corresponding mixture in a kneader mixer, the components are mixed, melted, homogenised and/or degassed and the mixture in then discharged,
**characterised in that**
the monomer, prepolymer, polymer or a corresponding mixture is force-fed by means of a force-feed device (4) into the kneader mixer (7), wherein the force-feed device is a conveyor device (4) which is installed upstream of the kneading mixer (7) and has at least one conveying screw (5, 5.1, 5.2) having different pitches (P₁, P₂), into which the monomer, prepolymer, polymer or a corresponding mixture is introduced and in which force/pressure is built up towards the kneading mixer (7), the product is compacted or compressed and is then fed into the kneader mixer (7) virtually without dead space.

2. Method according to claim 1, **characterised in that** the monomer, prepolymer, polymer or a corresponding mixture is fed into the kneader mixer (7) close to an end face (9) of this.

3. Method according to claim 1 or 2, **characterised in that** the monomer, prepolymer, polymer or a corresponding mixture is fed in as a powder.

4. Method according to one of claims 1 to 3, **characterised in that** the solvent is fed into the kneader mixer (7) at any desired point and/or in any desired orientation, regardless of the state of aggregation thereof.

5. Method according to one of claims 1 to 4, **characterised in that** the monomer, prepolymer, polymer or a corresponding mixture is fed into the kneader mixer (7) as a premix with the solvent, regardless of the state of aggregation thereof.

6. Method according to claim 5, **characterised in that** the monomer, prepolymer, polymer or a corresponding mixture is premixed in the force-feed device (4).

7. Method according to one of claims 1 to 6, **characterised in that** the kneader mixer (7) and/or the force-feed device (4) are influenced thermally in the region of a feed zone (8).

8. Method according to one of claims 1 to 7, **characterised in that** the solvent is fed at various points into the force-feed device (4) and/or the kneader mixer (7) and/or in various amounts.

9. Installation for carrying out the method according to one of claims 1 to 8, **characterised in that** a device (4) for force-feeding the monomer, prepolymer, polymer or a corresponding mixture is assigned to the kneader mixer (7), wherein the force-feed device is a conveyor device (4) which is installed upstream of the kneader mixer (7) and has at least one conveying screw (5, 5.1, 5.2) having different pitches (P₁, P₂), into which the monomer, prepolymer, polymer or a corresponding mixture is to be introduced and in which force/pressure towards the kneader mixer (7) can be built up, the product is compacted or can be compressed and can then be fed into the kneader mixer (7) virtually without dead space.

10. Installation according to claim 9, **characterised in that** the device is a single- or twin-shaft conveying screw (5, 5.1, 5.2).

11. Installation according to claim 10, **characterised in that** the geometry, in particular the pitch (P₁, P₂) of the conveying screw (5, 5.1, 5.2) and also the core diameter thereof is configured such that desired pressure and/or relief zones are formed.

12. Installation according to one of claims 9 to 11, **characterised in that** the kneader mixer (7) has an inlet for the solvent.

13. Installation according to one of claims 9 to 12, **characterised in that** the device (4) for force-feeding the monomer, prepolymer or a corresponding mixture into the kneader mixer (7) has an inlet for the solvent.

14. Installation according to one of claims 9 to 13, **characterised in that** more than one device (4) for force-feeding the monomer, prepolymer or a corresponding mixture is assigned to the kneader mixer (7).

## Revendications

1. Procédé de préparation d'une solution à filer pour la fabrication d'une fibre de polymère, en particulier une fibre de p-aramide, dans lequel un monomère, un pré-polymère, un polymère, des additifs, ou un mélange correspondant sont ajoutés, mélangés avec un solvant, fondus, homogénéisés et/ou dégazés dans un mélangeur-pétrisseur et ensuite déchargés,
**caractérisé par le fait**
**que** le monomère, le pré-polymère, le polymère ou un mélange correspondant est introduit par force, au moyen d'un dispositif d'entrée forcée (4), dans le mélangeur-pétrisseur (7), le dispositif d'entrée forcée étant un convoyeur (4) connecté en amont du mélangeur-pétrisseur (7) avec au moins une vis sans fin de transport (5, 5.1, 5.2) à pentes différentes (P1, P2) dans lequel est introduit le monomère, le pré-polymère, le polymère ou un mélange correspondant et dans lequel de la force/pression est établie vers le mélangeur-pétrisseur (7), le produit est compacté ou condensé et ensuite introduit pratiquement sans espace mort dans le mélangeur-pétrisseur (7).

2. Procédé selon la revendication 1, **caractérisé par le fait que** le monomère, le pré-polymère, le polymère ou un mélange correspondant est introduit à proximité d'une face frontale (9) du mélangeur-pétrisseur (7) dans ce dernier.

3. Procédé selon la revendication 1 ou 2, **caractérisé par le fait que** le monomère, le pré-polymère, le polymère ou un mélange correspondant est introduit sous forme de poudre.

4. Procédé selon l'une des revendications 1 à 3, **caractérisé par le fait que** le solvant est introduit, indépendamment de son état d'agrégation, à un endroit quelconque et/ou selon une orientation quelconque dans le mélangeur-pétrisseur (7).

5. Procédé selon l'une des revendications 1 à 4, **caractérisé par le fait que** le monomère, le pré-polymère, le polymère ou un mélange correspondant est introduit pré-mélangé avec le solvant, indépendamment de son état d'agrégation, dans le mélangeur-pétrisseur (7).

6. Procédé selon la revendication 5, **caractérisé par le fait que** le monomère, le pré-polymère, le polymère ou un mélange correspondant est pré-mélangé dans le moyen d'entrée forcée (4).

7. Procédé selon l'une des revendications 1 à 6, **caractérisé par le fait que** le mélangeur-pétrisseur (7) et/ou le moyen d'entrée forcée (4) sont influencés thermiquement à l'endroit d'une zone d'introduction (8).

8. Procédé selon l'une des revendications 1 à 7, **caractérisé par le fait que** le solvant est introduit à divers endroits dans le moyen d'entrée forcée (4) et/ou le mélangeur-pétrisseur (7) et/ou est introduit en des quantités différentes.

9. Installation pour la mise en oeuvre du procédé selon l'une des revendications 1 à 8, **caractérisée par le fait qu'**au mélangeur-pétrisseur (7) est associé un dispositif (4) destiné à introduire par force le monomère, le pré-polymère, le polymère ou un mélange correspondant, dans lequel le moyen d'entrée forcée est un convoyeur (4) connecté en amont du mélangeur-pétrisseur (7) avec au moins une vis sans fin de transport (5, 5.1, 5.2) à pentes différentes (P1, P2) dans lequel doit être introduit le monomère, le pré-polymère, le polymère ou un mélange correspondant et dans lequel de la force/pression peut être établie vers le mélangeur-pétrisseur (7), le produit est compacté ou condensé et peut ensuite être introduit pratiquement sans espace mort dans le mélangeur-pétrisseur (7).

10. Installation selon la revendication 9, **caractérisée par le fait que** le dispositif est une vis sans fin de transport (5, 5.1, 5.2) à un ou deux arbres.

11. Installation selon la revendication 10, **caractérisée par le fait que** la géométrie, en particulier la pente (P1, P2) de la vis sans fin de transport (5, 5.1, 5.2) ainsi que son diamètre central, est conçue de sorte qu'il se produise des zones de pression et/ou de détente désirées.

12. Installation selon l'une des revendications 9 à 11, **caractérisée par le fait que** le mélangeur-pétrisseur (7) présente une entrée pour le solvant.

13. Installation selon l'une des revendications 9 à 12, **caractérisée par le fait que** le moyen (4) destiné à introduire par force le monomère, le pré-polymère ou un mélange correspondant dans le mélangeur-pétrisseur (7) présente une entrée pour le solvant.

14. Installation selon l'une des revendications 9 à 13, **caractérisée par le fait qu'**au mélangeur-pétrisseur (7) est associé plus d'un moyen (4) destiné à introduire par force le monomère, le pré-polymère ou un mélange correspondant.
